# EUROPEAN PATENT APPLICATION

(11) **EP 4 847 246 A1**
(43) Date of publication of application: **02.12.2026**
(21) Application number: 25179103.4
(22) Date of filing: 27.05.2025
(51) Int. Cl.: B32B 27/08, B32B 27/32, C08L 23/04

(54) **ORIENTED MULTILAYER FILM COMPRISING AT LEAST ONE SKIN LAYER COMPRISING A POLYETHYLENE COMPOSITION**

(71) Applicant: Borealis GmbH, 1020 Vienna (AT)
(72) Inventor: WANG, Jingbo, 4021 Linz (AT); OLRY, Camille, 92400 Courbevoie (FR); REITER, Florian, 4021 Linz (AT); NIEDERSUESS, Peter, 4021 Linz (AT)
(74) Representative: Maiwald GmbH

(57) **Abstract**

Multilayer oriented film having skin layers and at least one inner layer of an oriented film, wherein at least one skin layer comprises a polyethylene composition, where the polyethylene composition comprises 55 to 98 wt.-% of a first polyethylene, wherein the first polyethylene has a flow rate ratio (FRR_{21/2}) in the range of from 25 to100 and a molecular weight distribution (MWD) determined by Gel Permeation Chromatography (GPC) according to the method described herein in section c) under measurement methods in the range of from 6.0 to 30.0, 2 to 45 wt.-% of a second polyethylene, where the second polyethylene has a flow rate ratio (FRR_{21/2}) in the range of from 15 to 60 and a molecular weight distribution (MWD) determined by Gel Permeation Chromatography (GPC) according to the method described herein in section c) under measurement methods in the range of from 2.0 to 6.0, wherein the density of the first polyethylene is higher than the density of the second polyethylene, both determined according to ISO 1183-1:2019 - method A.

## Description

### Technical Field of the Invention

The present invention relates to polymeric compositions and films, in particular polyethylene-based compositions suitable for use in recyclable mono-material packaging applications. The invention further relates to oriented films comprising such compositions, which provide enhanced mechanical and optical properties.

### Background of the Invention

Plastics are widely used in everyday life, offering functionality and convenience across a broad range of applications, including food and non-food packaging. Despite their versatility, the increasing reliance on virgin polymer production has raised environmental concerns. In recent years, the focus has shifted toward improving the sustainability of plastic materials, guided by the principles of reduce, reuse, and recycle. These principles aim to minimize plastic waste and encourage the development of circular material streams.

One critical pathway toward enhancing the recyclability of plastic packaging lies in the redesign of multi-material structures into recyclable mono-material solutions. Conventional multilayer packaging often incorporates incompatible materials such as polyethylene terephthalate (PET), polyamide, or aluminum, which deliver excellent performance characteristics but hinder recyclability due to their material heterogeneity. PET is widely used due to its favorable combination of stiffness, clarity, and toughness. However, its replacement with polyolefin-based solutions is desirable to enable fully recyclable polyethylene (PE) structures. Accordingly, there exists a need for PE-based materials that can mimic the performance profile of PET while remaining compatible with existing PE recycling streams.

PET is widely employed as a skin layer in multilayer film structures, owing to its superior mechanical strength, optical clarity, and thermal stability. In such configurations, PET serves to enhance the dimensional stability, printability, and surface gloss of the film, thereby supporting high-quality printed packaging formats and enabling efficient form-fill-seal operations. The high melting point of PET further permits its use in applications involving elevated temperatures, including hot-fill and retort packaging. PET skin layers are also commonly utilized in conjunction with other substrates, such as polyethylene (PE), to construct laminates that balance stiffness, sealability, and barrier functionality.

However, as already outlined above, the inclusion of PET in multilayer structures presents challenges in terms of recyclability, as PET is incompatible with PE recycling streams and typically resists effective separation during post-consumer waste processing. Accordingly, there is a growing need for recyclable mono-material solutions in which the functional benefits of PET are replicated using polyolefin-based alternatives, thereby enabling the design of packaging structures that align with circular economy principles. This is in particular necessary for application in the skin layer of multilayered films.

Generally, in oriented films, the orientation process enhances mechanical and optical properties of the entire film structure. When PET is used as the skin layer of such oriented films, its high tensile strength and dimensional stability complement the effects of machine-direction stretching, leading to exceptional stiffness, improved flatness, and reduced film deformation during converting and packaging. The orientation also tends to increase surface gloss and clarity, attributes already inherent to PET, thereby amplifying its visual appeal and print performance. This makes PET particularly effective in high-end, visually demanding packaging formats where tight registration, crisp printing, and structural integrity are critical. In contrast, in non-multilayer oriented films, PET still offers good performance, but the lack of orientation limits the mechanical reinforcement and optical enhancement.

Hence, there is generally the need for a PE replacement for PET in skin layers of an oriented film, which resembles the specifically advantageous properties of PET (i.e. mechanical stability, optical appearance, thermal stability), and which does not suffer from the orientation process.

WO 2024/112165 A1 discloses an ethylene alpha-olefin copolymer comprising ethylene and at least one alpha-olefin structural unit, wherein thermal gradient interaction chromatography (TGIC) reveals at least two distinct elution peaks in the range of 250 K to 430 K. The presence of multiple peaks indicates a multimodal molecular architecture, which is particularly relevant for bimodal linear low-density polyethylene (LLDPE). Such structures offer improved melt strength and mechanical properties, which are beneficial for downgauging and sustainability objectives. However, WO 2024/112165 A1 does not provide any information on usage of the disclosed polyolefin in films, in particular not in skin layers of multilayer oriented films. Furthermore, no information about the ability to replace PET is retrievable from WO 2024/112165 A1.

WO 2024/096636 A1 describes a polyethylene composition comprising at least one ethylene-alpha olefin copolymer, wherein a molecular weight ratio derived from temperature rising elution fractionation (TREF) analysis indicates that at least 55.0 wt.% of the composition elutes at or above 90 °C, while no more than 45.0 wt.% elutes between 35 °C and 90 °C. This composition offers a tailored distribution of crystallinity that supports enhanced toughness and stiffness, enabling the production of high-performance mono-material films. However, WO 2024/096636 A1 aims at the production of biaxially oriented LLDPE films. Thus, WO 2024/096636 A1 does not provide any information on usage of the disclosed polyolefin in skin layers of multilayer oriented films.

WO 2024/145415 A1 teaches a polyethylene resin composition suitable for injection stretch blow molding (ISBM), comprising a co-crystallized blend of a high-density polyethylene (HDPE) base resin and a linear low-density polyethylene (LLDPE). However, as WO 2024/145415 A1 focuses on injection stretch blow molding (ISBM), WO 2024/145415 A1 does not provide any information on usage of the disclosed polyolefin in films, in particular not in skin layers of multilayer oriented films. Furthermore, no information about the ability to replace PET is retrievable from WO 2024/145415 A1.

WO 2020/176203 A1 discloses a polymer composition comprising from 0% to 80% by weight of a polyolefin component and from 20% to 100% by weight of a thermoplastic elastomer component. The composition is characterized by a maximum elastic modulus of 1500 MPa at -40 °C, a coefficient of thermal expansion of at least 120 × 10⁻⁶/K, and a thermal contraction stress of no more than 4.0 MPa. These mechanical and thermal properties make the composition suitable for applications requiring low-temperature flexibility and dimensional stability, such as optical fibers. Hence, WO 2020/176203 A1 does not provide any information on usage of the disclosed polyolefin in films, in particular not in skin layers of multilayer oriented films. Furthermore, no information about the ability to replace PET is retrievable from WO 2020/176203 A1.

EP 4 239 014 A1 provides a polyethylene-based polymer composition designed to replace multilayer films with recyclable mono-material alternatives. The disclosed composition comprises a tailored blend of LLDPE and HDPE components with specified molecular weight distributions and comonomer content, providing a combination of stiffness, toughness, and processability. The material enables the production of recyclable polyethylene films with performance comparable to PET-based structures. However, the film disclosed in EP 4 239 014 A1 is a monolayer film. Furthermore, it is a blown film, which has not been stretched in machine direction. Hence, EP 4 239 014 A1 does not provide any information on usage of the disclosed polyolefin in skin layers of multilayer oriented films.

EP 4 431 552 A1 discloses a polymer composition comprising a controlled blend of polyethylene components with engineered molecular weight and short-chain branching characteristics. The composition provides films with superior optical properties, tensile strength, and environmental stress crack resistance (ESCR). It is particularly suitable for use in biaxially oriented polyethylene (BOPE) films, where enhanced mechanical and aesthetic properties are critical for replacing PET in mono-material packaging. However, EP 4 431 552 A1 allows for monolayer films or multilayer films without clarifying in which layer the composition is used. Hence, EP 4 431 552 A1 does not provide any information on usage of the disclosed polyolefin in skin layers of multilayer oriented films.

WO 2019/211671 A1 discloses a tactile polymer composition prepared from a mixture of polyolefin and a rubber component, wherein the mixture is prepared in a post-reactor process. The tactile polymer composition exhibits a complex viscosity at 0.10 rad/s according to ASTM D4440 in the range of 1,000 to 40,000 Pa·s. This composition is designed to provide improved soft-touch properties, making it suitable for applications where enhanced tactile feel is desired. The inclusion of a rubber component imparts elasticity and softness to the composition, while the post-reactor blending process allows for precise control over the material's rheological properties. Such compositions can be utilized in various applications, including films, molded products, and foams, where both mechanical performance and tactile qualities are important. However, WO 2019/211671 A1 fails to disclose multilayer oriented films made of said composition. Specifically, WO 2019/211671 A1 does not provide any information on usage of the disclosed polyolefin in skin layers of multilayer oriented films.

### Summary of the Invention

In light of the foregoing, there remains a need for multilayer films comprising skin layers comprising polyethylene compositions that offer a superior balance of stiffness, toughness, and optical clarity while supporting downgauging and compatibility with mono-material recycling systems. While the cited prior art illustrates meaningful progress in this field, further improvements are required to provide PE-based solutions that can fully replicate the performance of PET skin-layer containing multilayer oriented films.

Hence, it is the object of the present invention to provide an multilayer oriented film, which is completely made from polyethylene, and which includes a PE-based skin layer resembling PET properties.

It has now surprisingly been found that this object is achieved by a multilayer oriented film having skin layers and at least one inner layer, wherein at least one skin layer comprises a polyethylene composition, wherein the polyethylene composition comprises
1) 55 to 98 wt.-% of a first polyethylene, wherein the first polyethylene has a flow rate ratio (FRR_{21/2}) in the range of from 25 to100 and a molecular weight distribution (MWD) determined by Gel Permeation Chromatography (GPC) according to the method described herein in section c) under measurement methods in the range of from 6.0 to 30.0
2) 2 to 45 wt.-% of a second polyethylene, wherein the second polyethylene has a flow rate ratio (FRR_{21/2}) in the range of from 15 to 60 and a molecular weight distribution (MWD) determined by Gel Permeation Chromatography (GPC) according to the method described herein in section c) under measurement methods in the range of from 2.0 to 6.0,
wherein the density of the first polyethylene is higher than the density of the second polyethylene, both determined according to ISO 1183-1:2019 - method A.

Moreover, it has now surprisingly found that above-mentioned object is achieved by the use of a polyethylene composition, wherein the polyethylene composition comprises
1) 55 to 98 wt.-% of a first polyethylene, wherein the first polyethylene has a flow rate ratio (FRR_{21/2}) in the range of from 25 to100 and a molecular weight distribution (MWD) determined by Gel Permeation Chromatography (GPC) according to the method described herein in section c) under measurement methods in the range of from 6.0 to 30.0
2) 2 to 45 wt.-% of a second polyethylene, wherein the second polyethylene has a flow rate ratio (FRR_{21/2}) in the range of from 15 to 60 and a molecular weight distribution (MWD) determined by Gel Permeation Chromatography (GPC) according to the method described herein in section c) under measurement methods in the range of from 2.0 to 6.0,

wherein the density of the first polyethylene is higher than the density of the second polyethylene, both determined according to ISO 1183-1:2019 - method A,
for the production of at least one skin layer of a multilayer oriented film according to the present invention.

The advantage of the present invention is that PET skin layers of a multilayer oriented film can be replaced by PE skin layers without sacrificing crucial properties such as mechanical stability, optical properties, and thermal stability. This unlocks the feature of mono-material recycling such provided multilayer film material and articles made therefrom.

### Definitions

Unless defined otherwise, all technical and scientific terms used herein have the same meaning as commonly understood by a person skilled in the art to which the invention pertains. Although any methods and materials similar or equivalent to those described herein can be used in practice for testing the present invention, the preferred materials and methods are described herein. In describing and claiming the present invention, the following terminology will be used in accordance with the definitions set out below. Unless clearly indicated otherwise, the use of the terms 'a', *'an',* and the like refers to one or more.

The term *'polyethylene composition'* as used herein denotes a composition comprising one or more polymers, wherein the molar amounts of the components of the polymer composition add up to a total amount of at least 50 mol-% ethylene monomer units.

The term *'ethylene homopolymer'* as used herein denotes a polymer consisting essentially of ethylene monomer units. Due to the requirements of large-scale polymerization, it may be possible that the ethylene homopolymer includes minor amounts of comonomer units, which usually is below 0.1 mol%, preferably below 0.05 mol%, most preferably below 0.01 mol% of the ethylene homopolymer.

The term *'ethylene copolymer'* denotes a polymer, which is derived from ethylene monomer units and at least one alpha-olefin comonomer. The alpha-olefin comonomer preferably is selected from alpha-olefin comonomers with 4 to 8 carbon atoms, more preferably 4 to 6 carbon atoms. Suitable alpha-olefin comonomer species are 1-butene, 1-hexene, 4-methyl-1-pentene, 1-octene or their mixtures. Preferred are 1-butene and 1-hexene.

Polyethylenes are usually classified by means of their density as low density e.g. as polyethylenes (LDPE), linear low density polyethylenes (LLDPE), medium density polyethylenes (MDPE) and high density polyethylenes (HDPE).

Hence, the term *'high density polyethylene (HDPE)'* as used herein denotes a polymer of ethylene having a density usually ranging between 930 and 970 kg/m³.

A polyethylene comprising more than one fraction differing from each other in at least one property, such as weight average molecular weight or comonomer content, is called *'multimodal'.* If the multimodal polyethylene composition or base resin includes two different fractions, it is called *'bimodal'* and, correspondingly, if it includes three different fractions, it is called *'trimodal'.* The form of the molecular weight distribution curve, i.e. the appearance of the graph of the polymer weight fraction as function of its molecular weight, of such a multimodal polyethylene composition or base resin will show two or more maxima depending on the modality or at least be distinctly broadened in comparison with the curves of the individual fractions.

The term *'elastomer'* as used herein denotes a natural or synthetic polymer having elastic properties.

The amounts disclosed herein relate to weight amounts in % by weight or wt.-%, if not stated otherwise.

The term *'machine direction oriented film'* as used herein denotes a polyolefin film that has been subjected to a uniaxial stretching process in the direction corresponding to the movement of the film through the manufacturing apparatus, such that the polymer chains become substantially aligned in said machine direction, thereby resulting in a film having improved tensile strength, stiffness, and optionally enhanced optical and barrier properties along the machine direction, without corresponding orientation in the transverse direction.

The term *'biaxially oriented film'* as used herein denotes a polyolefin film that has been subjected to a stretching process in both the machine direction and the transverse direction, either sequentially or simultaneously, such that the polymer chains are substantially aligned in both in-plane directions, thereby imparting to the film a combination of enhanced dimensional stability, tensile strength, puncture resistance, and optical clarity, uniformly across its surface.

The term *'multilayer oriented film'* as used herein denotes a film comprising two or more polymeric layers comprising polyolefins, which may be formed by coextrusion, lamination, or coating processes, and which is subjected to an orientation process in one or both of the in-plane directions, such that at least one of the constituent layers exhibits molecular alignment resulting from said orientation, whereby the film structure as a whole exhibits synergistically enhanced mechanical, optical, and/or barrier properties attributable to both the multilayer configuration and the effects of molecular orientation.

All the properties of the polymers described herein are measured in accordance with the methods described in section *'measurement methods'* unless otherwise provided.

### Detailed Description of the Invention

### Polyethylene Composition

At least one skin layer of the multilayer oriented film according to the present invention comprises a polyethylene composition, wherein the polyethylene composition comprises
1) 55 to 98 wt.-% of a first polyethylene (**PE1**), where the first polyethylene (**PE1**) has a flow rate ratio (FRR_{21/2}) in the range of from 25 to100 and a molecular weight distribution (MWD) determined by Gel Permeation Chromatography (GPC) according to the method described herein in section c) under measurement methods in the range of from 6.0 to 30.0
2) 2 to 45 wt.-% of a second polyethylene (**PE2**), where the second polyethylene (**PE2**) has a flow rate ratio (FRR_{21/2}) in the range of from 15 to 60 and a molecular weight distribution (MWD) determined by Gel Permeation Chromatography (GPC) according to the method described herein in section c) under measurement methods in the range of from 2.0 to 6.0,
wherein the density of the first polyethylene (**PE1**) is higher than the density of the second polyethylene (**PE2**), both determined according to ISO 1183-1:2019 - method A.

The polyethylene composition preferably has a density determined according to ISO 1183-1:2019 - method A of from 930 to 950 kg/m³, more preferably of from 938 to 948 kg/m³.

It is preferred when the polyethylene composition has a melt flow rate MFR₂ determined in accordance with ISO 1133 at 190 °C under a load of 2.16 kg of from 0.8 to 2.0 g/10 min, more preferably from 0.9 to 1.5 g/10 min, and/or a melt flow rate MFR₂₁ determined in accordance with ISO 1133 at 190 °C under a load of 21.6 kg of from 35 to 150 g/10 min, more preferably from 45 to 80 g/10 min.

Moreover, the polyethylene composition preferably has a weight-average molecular weight (Mw) determined by Gel Permeation Chromatography (GPC) according to the method described herein in section c) under measurement methods ranging from 90,000 to 130,000 g/mol, more preferably from 105,000 to 125,000 g/mol and/or a z-average molecular weight (Mz) determined by Gel Permeation Chromatography (GPC) according to the method described herein in section c) under measurement methods ranging from 500,000 to 710,000 g/mol, more preferably from 600,000 to 700,000 g/mol.

It is also preferred that the ratio of Mw/Mn (MWD) determined by Gel Permeation Chromatography (GPC) according to the method described herein in section c) under measurement methods of the polyethylene composition is in the range of from 7.0 to 20.0, more preferably from 10.0 to 15.0. The ratio of Mz/Mw determined by Gel Permeation Chromatography (GPC) according to the method described herein in section c) under measurement methods of the polyethylene composition is preferably in the range of from 4.5 to 7.5, more preferably from 5.0 to 6.0.

The polyethylene composition preferably has a melting temperature *Tₘ* ranging from 125 to 145 °C, more preferably from 127 to 134 °C and/or a crystallization temperature Tc ranging from 110 to 130 °C, more preferably from 114 to 121 °C.

The melting enthalpy *Hₘ* of the polyethylene composition preferably ranging from 145 to 210 J/g, more preferably from 150 to 205 J/g.

The polyethylene composition comprised in the at least one skin layer of the multilayer oriented film according to the present invention comprises a first polyethylene (**PE1**) and a second polyethylene (**PE2**). The density determined according to ISO 1183-1:2019 - method A of the first polyethylene (**PE1**) is higher than the density determined according to ISO 1183-1:2019 - method A of the second polyethylene (**PE2**). Preferably, the density determined according to ISO 1183-1:2019 - method A of the first polyethylene (**PE1**) is more than 10 kg/m³ higher than the density determined according to ISO 1183-1:2019 - method A of the second polyethylene (**PE2**), preferably 20 kg/m³ higher.

### First polyethylene (PE1)

The polyethylene composition comprises the first polyethylene (**PE1**) in an amount from 55 to 98 wt.-%, preferably from 70 to 97 wt.-%, and most preferably from 80 to 95 wt.-%, based on the total weight of the polyethylene composition.

The first polyethylene (**PE1**) comprised by the polyethylene composition comprised by at least one skin layer of the multilayer oriented film according to the present invention preferably has a density in the range of from 930 to 970 kg/m³, more preferably in the range of from 950 to 965 kg/m³, and most preferably in the range of from 952 to 960 kg/m³. Hence, preferably, the first polyethylene (**PE1**) is a high-density polyethylene (HDPE).

Preferably, the first polyethylene (**PE1**) has a MFR₂ determined in accordance with ISO 1133 at 190 °C under a load of 2.16 kg in the range of from 0.1 to 10 g/10 min, more preferably in the range of from 0.5 to 5.0 g/10 min, and most preferably in the range of from 0.7 to 0.95 g/10 min.

Furthermore, the first polyethylene (**PE1**) preferably has a MFR₂₁ determined in accordance with ISO 1133 at 190 °C under a load of 21.6 kg in the range of from 4 to 500 g/10 min, more preferably in the range of from 10 to 250 g/10 min, and most preferably in the range of from 25 to 50 g/10 min.

The first polyethylene (**PE1**) has a flow rate ratio (FRR_{21/2}) in the range of from 25 to100, preferably in the range of from 40 to 85, and most preferably in the range of from 55 to 65.

The first polyethylene (**PE1**) has further preferably a Mw determined by Gel Permeation Chromatography (GPC) according to the method described herein in section c) under measurement methods in the range of from 100,000 to 200,000 g/mol, more preferably in the range of from 110,000 to 160,000 g/mol, even more preferably in the range of from 120,000 to 150,000 g/mol, and most preferably in the range of from 130,000 to 140,000 g/mol.

The Mz determined by Gel Permeation Chromatography (GPC) according to the method described herein in section c) under measurement methods of the first polyethylene (**PE1**) is preferably in the range of from 500,000 to 1,000,000 g/mol, more preferably in the range of from 600,000 to 900,000 g/mol, even more preferably in the range of from 640,000 to 800,000 g/mol, and most preferably in the range of from 690,000 to 740,000 g/mol.

Moreover, the first polyethylene (**PE1**) has a molecular weight distribution (MWD) determined by Gel Permeation Chromatography (GPC) according to the method described herein in section c) under measurement methods in the range of from 6.0 to 30.0, preferably in the range of from 8.0 to 25.0, more preferably in the range of from 10.0 to 20.0, and most preferably in the range of from 13.0 to 15.0.

The ratio Mz/Mw determined by Gel Permeation Chromatography (GPC) according to the method described herein in section c) under measurement methods of the first polyethylene (**PE1**) is preferably in the range of from 3.0 to 7.0, more preferably in the range of from 4.0 to 6.0, and most preferably in the range of from 5.0 to 5.5.

Optionally, the first polyethylene (**PE1**) of the present invention may comprise additives in an amount of from 0.1 to 5 wt.-% relative to the total weight of the first polyethylene (**PE1**). The additives are selected from the group of acid scavengers, antioxidants, anti-blocking agents, UV-stabilizers, anti-scratch agents, mold release agents, lubricants, anti-static agents, pigments, and mixtures thereof.

The first polyethylene (**PE1**) can be a polyethylene homopolymer or a polyethylene copolymer.

Preferably, the first polyethylene (**PE1**) is a copolymer of ethylene and at least one C₃-C₁₂ alpha-olefin. In particular, C₃-C₁₀ alpha-olefins are preferred, such as propene, 1-butene, 1-hexene, 1-octene, and 4-methyl-1-pentene. In a most preferred embodiment, the first polyethylene (**PE1**) is a copolymer of ethylene and only one C₄-C₁₀ alpha-olefin. Hence it is the most preferred that the first polyethylene (**PE1**) is ethylene/1-butene copolymer. The first polyethylene (**PE1**) has preferably a comonomer content of from 0 to 1.5 mol-%, and more preferably from 0.1 to 0.6 mol-%.

Furthermore, the first polyethylene (**PE1**) comprised in the polyethylene composition comprised in the skin layer of the multilayer oriented film according to the present invention preferably comprises at least two fractions:
- 30-70 wt.-%, based on the total weight of the first polyethylene (**PE1**), of a first polyethylene fraction (**PE1F1**) with a density of from 955 to 980 kg/m³, and a melt flow rate MFR₂ of from 100 to 1000 g/10 min, and
- 30-70 wt.-%, based on the total weight of the first polyethylene (**PE1**), of a second polyethylene (**PE2**) fraction (**PE1F2**) with a density of from 920 to 970 kg/m³, and a melt flow rate MFR₂ of from 0.0001 to 1.0 g/10 min.

In a preferred embodiment, the first polyethylene (**PE1**) is bimodal, meaning that it contains only two polyethylene fractions: the first polyethylene fraction (**PE1F1**) and the second polyethylene (**PE2**) fraction (**PE1F2**).

### a) First polyethylene Fraction (PE1F1)

The first polyethylene (**PE1**) of the present invention preferably comprises a first polyethylene fraction (**PE1F1**) in an amount of from 30 to 70 wt.-%, preferably from 40 to 55 wt.-%, based on the total weight of the first polyethylene (**PE1**).

The first polyethylene fraction (**PE1F1**) has a density of from 955 to 980 kg/m³ and a melt flow rate MFR₂ of from 100 to 1000 g/10 min. In a preferred embodiment, the first polyethylene fraction (**PE1F1**) has a density of from 960 to 975 kg/m³, more preferably from 965 to 975 g/m³, and/or a melt flow rate MFR₂ of from 200 to 500 g/10 min.

In a preferred embodiment, the first polyethylene fraction (**PE1F1**) is a homopolymer of ethylene. Hence, preferably, the first polyethylene fraction (**PE1F1**) does not contain any comonomer units.

### b) Second polyethylene fraction (PE1F2)

The first polyethylene (**PE1**) of the present invention further preferably comprises a second polyethylene fraction (**PE1F2**) in an amount of from 30 to 70 wt.-%, preferably from 45 to 60 wt.-%, based on the total weight of the first polyethylene (**PE1**).

The second polyethylene fraction (**PE1F2**) has a density of from 920 to 970 kg/m³ and a melt flow rate MFR₂ of from 0.0001 to 1.0 g/10 min. In a preferred embodiment, the second polyethylene fraction (**PE1F2**) has a density of from 930 to 960 kg/m³, and most preferably from 935 to 950 kg/m³, and/or a melt flow rate MFR₂ of from 0.0005 to 0.5 g/10 min, and most preferably from 0.001 to 0.05 g/10 min.

In a preferred embodiment, the second polyethylene fraction (**PE1F2**) is a copolymer of ethylene and at least one C₃-C₁₂ alpha-olefin. In particular, C₃-C₁₀ alpha-olefins are preferred, such as propene, 1-butene, 1-hexene, 1-octene, and 4-methyl-1-pentene. In a most preferred embodiment, the second polyethylene fraction (**PE1F2**) is a copolymer of ethylene and only one C₄-C₁₀ alpha-olefin. Hence it is most preferred that the second polyethylene fraction (**PE1F2**) is ethylene/1-butene copolymer.

### c) Process for preparing the first polyethylene (PE1)

The first polyethylene (**PE1**) may be produced by polymerization using conditions which create a multimodal polymer product ideally using a Ziegler Natta catalyst system. Typically, a two or more stage, i.e. multistage, polymerization process is used with different process conditions in the different stages or zones (e.g. different temperatures, pressures, polymerization media, hydrogen partial pressures, etc.). Preferably, the multimodal composition is produced by a multistage polymerization, e.g. using a series of reactors, with optional comonomer addition preferably in only the reactor(**s**) used for production of the higher/highest molecular weight component(**s**). A multistage process is defined to be a polymerization process in which a polymer comprising two or more fractions is produced by producing each or at least two polymer fraction(**s**) in a separate reaction stage, usually with different reaction conditions in each stage, in the presence of the reaction product of the previous stage which comprises a polymerization catalyst. The polymerization reactions used in each stage may involve conventional ethylene homopolymerization or copolymerization reactions, e.g. gas-phase, slurry phase, liquid phase polymerizations, using conventional reactors, e.g. loop reactors, gas phase reactors, batch reactors etc. (see for example WO 97/44371 A1 and WO 96/18662 A1).

Preferably, the first polyethylene (**PE1**) according to the present invention is a bimodal high-density polyethylene prepared in a two-stage polymerization process: a first and a second polymerization stage.

### First Polymerization Stage

The first polymerization stage produces an ethylene homopolymer or an ethylene copolymer, typically an ethylene homopolymer, which is subsequently fed to the second polymerization stage. The second polymerization stage can produce a further ethylene homopolymer, or an ethylene copolymer, preferably an ethylene copolymer.

The first polymerization stage is preferably a slurry polymerization step.

The slurry polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons. An especially preferred diluent is propane, possibly containing minor amounts of methane, ethane and/or butane.

The ethylene content in the fluid phase of the slurry may be from 1 to 50 % by mole, preferably from 2 to 20 % by mole and in particular from 2 to 10 % by mole. The benefit of having a high ethylene concentration is that the productivity of the catalyst is increased but the drawback is that more ethylene then needs to be recycled than if the concentration was lower.

The temperature in the first polymerization stage is typically from 60 to 100 °C. An excessively high temperature should be avoided to prevent partial dissolution of the polymer into the diluent and the fouling of the reactor. The pressure is generally from 1 to 150 bar, preferably from 40 to 80 bar.

The slurry polymerization may be conducted in any known reactor used for slurry polymerization. Such reactors include a continuous stirred tank reactor and a loop reactor. It is especially preferred to conduct the slurry polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the MFR₂ of the resultant polymer. The amount of hydrogen needed to reach the desired MFR depends on the catalyst used and the polymerization conditions. The desired polymer properties may be obtained in slurry polymerization in a loop reactor with the molar ratio of hydrogen to ethylene of from 100 to 1000 mol/kmol (or mol/1000 mol) and preferably of from 200 to 800 mol/kmol.

The average residence time in the first polymerization stage is typically from 20 to 120 minutes, preferably from 30 to 80 minutes. As it is well known in the art, the average residence time 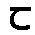 can be calculated from Equation 1 below:

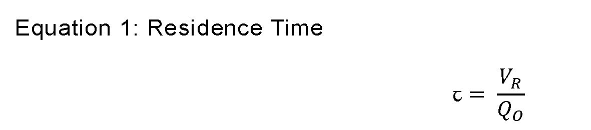

Where V_{R} is the volume of the reaction space (in case of a loop reactor, the volume of the reactor, in case of the fluidized bed reactor, the volume of the fluidized bed) and Qₒ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the ethylene feed rate.

As a result of the first polymerization stage, the first polyethylene fraction (**PE1F1**) is produced.

### Second Polymerization Stage

In the second polymerization stage, ethylene is polymerized, optionally together with at least one alpha-olefin comonomer, in the presence of the catalyst and the ethylene polymer produced in the first polymerization stage, **PE1F1**. It will thus be appreciated that the second polymerization stage generates an ethylene polymer, which combines with the ethylene polymer from the first polymerization stage (**PE1F1**), to form the first polyethylene (**PE1**). Preferable comonomers are discussed hereinbefore, however it is noted that it is particularly preferable if the at least one alpha-olefin is butene.

The second polymerization stage is preferably a gas phase polymerization step, i.e. carried out in a gas-phase reactor. Any suitable gas phase reactor known in the art may be used, such as a fluidised bed gas phase reactor.

For gas phase reactors, the reaction temperature used will generally be in the range 60 to 115 °C (e.g. 70 to 110 °C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

A chain transfer agent (e.g. hydrogen) is typically added to the second polymerization stage, preferably in amounts of 50 to 500 mol of H₂/kmol ethylene.

The split between the first polymerization stage and the second polymerization stage (i.e. between the slurry polymerization and the gas phase polymerization) is typically 30:70 to 70:30, more preferably 40:55 to 60:45.

As a result of the second polymerization step, a mixture of the first polyethylene fraction (**PE1F1**) and the second polyethylene fraction (**PE1F2**) is produced.

### Prepolymerization

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerization step is typically from 0 to 90 °C, preferably from 20 to 80 °C and more preferably from 55 to 75 °C.

The pressure is not critical and is typically from 1 to 150 bar, preferably from 40 to 80 bar.

The amount of monomer is typically such that from 0.1 to 1000 g of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also, in such cases it is necessary to introduce so much cocatalyst into the prepolymerization stage that a sufficient polymerization reaction is obtained therein.

It is understood within the scope of the invention that the amount of polymer produced in the prepolymerization typically lies within 1-5 wt.-% in respect to the final first polyethylene (PE1). Within the scope of the present invention, the split of the prepolymerization is included in the split of the first polymerization stage.

### Catalyst

The polymerization is typically conducted in the presence of a Ziegler-Natta polymerization catalyst. Suitable Ziegler-Natta (ZN) catalysts generally comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminum compound and a titanium compound supported on a particulate support.

The particulate support can be an inorganic oxide support, such as silica, alumina, titania, silica-alumina, silica-titania or a MgCl₂ based support. Preferably, the support is silica or a MgCl₂ based support.

Particularly preferred Ziegler-Natta catalysts are such as described in EP 1 378 528 A1.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. An especially preferred titanium compound is titanium tetrachloride.

The catalyst can be prepared by sequentially contacting the carrier with the above-mentioned compounds, as described in EP 688794 A1 or WO 99/51646 A1. Alternatively, it can be prepared by first preparing a solution from the components and then contacting the solution with a carrier, as described in WO 01/55230 A1.

Another group of suitable ZN catalysts contain a titanium compound together with a magnesium halide compound acting as a support. Thus, the catalyst contains a titanium compound and optionally a Group 13 compound for example an aluminium compound on a magnesium dihalide, like magnesium dichloride. Such catalysts are disclosed, for instance, in WO 2005/118655 A1, EP 810235 A1, WO 2014/096296 A1, and WO 2016/097193 A1.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically, triethylaluminium is used in such amount that the molar ratio of aluminium to the transition metal, like Al/Ti, is from 1 to 1000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, 2,2-di-(2-furan)-propane, or isomers or mixtures thereof. Internal organic compounds are also often called internal electron donors.

### Second polyethylene (PE2)

The polyethylene composition comprised in the skin layer of the multilayer oriented film according to the present invention further comprises a second polyethylene (**PE2**).

The second polyethylene (**PE2**) has a flow rate ratio (FRR_{21/2}) in the range of from 15 to 60 and a molecular weight distribution (MWD) determined by Gel Permeation Chromatography (GPC) according to the method described herein in section c) under measurement methods in the range of from 2.0 to 6.0.

The density determined according to ISO 1183-1:2019 - method A of the second polyethylene (**PE2**) is preferably in the range of from 850 to 908 kg/m³, more preferably in the range of from 870 to 905 kg/m³, and most preferably in the range of from 880 to 900 kg/m³.

Preferably, the second polyethylene (**PE2**) is an ethylene-based elastomer. Hence, more preferably, the second polyethylene (**PE2**) is a copolymer of ethylene and propylene or a C₄-C₁₀ alpha-olefin. Suitable C₄-C₁₀ alpha-olefins include 1-butene, 1-hexene and 1-octene, preferably 1-butene or 1-octene and more preferably 1-octene. Preferably copolymers of ethylene and 1-octene are used. In case the second polyethylene (**PE2**) is a copolymer of ethylene and propylene it has preferably an ethylene content from 10.0 to 55.0 wt.-%, more preferably from 15.0 to 50.0 wt.-%, and most preferably from 18.0 to 48.0 wt.-%, with respect to the total weight of the second polyethylene (**PE2**). In case the second polyethylene (**PE2**) is a copolymer of ethylene and a C₄-C₁₀ alpha olefin it has preferably an ethylene content from 60.0 to 95.0 wt.-%, more preferably from 65.0 to 90.0 wt.-%, and most preferably from 70.0 to 88.0 wt%.

Preferably, the second polyethylene (**PE2**) has a MFR₂ determined in accordance with ISO 1133 at 190 °C under a load of 2.16 kg in the range of from 0.1 to 100 g/10 min, more preferably in the range of from 5.0 to 50.0 g/10 min, even more preferably in the range of from 8.0 to 50.0 g/10 min, still even more preferably in the range of from 10.0 to 45.0 g/10 min, further still even more preferably in the range of from 15.0 to 40.0 g/10 min, and most preferably in the range of from 25.0 to 35.0 g/10 min.

Furthermore, the second polyethylene (**PE2**) preferably has a MFR₂₁ determined in accordance with ISO 1133 at 190 °C under a load of 21.6 kg in the range of from 1 to 1,000 g/10 min, more preferably in the range of from 500 to 900 g/10 min, and most preferably in the range of from 730 to 810 g/10 min.

The second polyethylene (**PE2**) has a flow rate ratio (FRR_{21/2}) in the range of from 15 to 60, preferably in the range of from 18 to 40, and most preferably in the range of from 22 to 28.

The second polyethylene (**PE2**) has further preferably a Mw determined by Gel Permeation Chromatography (GPC) according to the method described herein in section c) under measurement methods in the range of from 10,000 to 120,000 g/mol, more preferably in the range of from 20,000 to 100,000 g/mol, even more preferably in the range of from 30,000 to 80,000 g/mol, and most preferably in the range of from 40,000 to 50,000 g/mol.

The Mz determined by Gel Permeation Chromatography (GPC) according to the method described herein in section c) under measurement methods of the second polyethylene (**PE2**) is preferably in the range of from 50,000 to 200,000 g/mol, more preferably in the range of from 60,000 to 100,000 g/mol, even more preferably in the range of from 70,000 to 90,000 g/mol, and most preferably in the range of from 75,000 to 85,000 g/mol.

Moreover, the second polyethylene (**PE2**) has a molecular weight distribution (MWD) determined by Gel Permeation Chromatography (GPC) according to the method described herein in section c) under measurement methods in the range of from 2.0 to 6.0, preferably in the range of from 2.5 to 4.0, more preferably in the range of from 2.7 to 3.5, and most preferably in the range of from 2.9 to 3.1.

The ratio Mz/Mw determined by Gel Permeation Chromatography (GPC) according to the method described herein in section c) under measurement methods of the second polyethylene (**PE2**) is preferably in the range of from 1.0 to 5.0, more preferably in the range of from 1.5 to 3.0, and most preferably in the range of from 1.8 to 2.0.

Optionally, the second polyethylene (**PE2**) of the present invention may comprise additives in an amount of from 0.1 to 5 wt.-% relative to the total weight of the second polyethylene (**PE2**). The additives are selected from the group of acid scavengers, antioxidants, anti-blocking agents, UV-stabilizers, anti-scratch agents, mold release agents, lubricants, anti-static agents, pigments, and mixtures thereof.

The melting point *Tₘ* measured with DSC according to ISO 11357-3 of the second polyethylene (**PE2**) is preferably below 130 °C, more preferably below 120 °C, even more preferably below 110 °C, and most preferably below 100 °C.

Furthermore, the glass transition temperature *T_{g}* measured with DMTA according to ISO 6721-7 of the second polyethylene (**PE2**) is preferably below -25 °C, more preferably below -30 °C, and most preferably below -35 °C.

### a) Process for preparing the second polyethylene (PE2)

The second polyethylene (**PE2**) can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known by the person skilled in the art.

Preferably the second polyethylene (**PE2**) is prepared in a one stage or two stage solution polymerization process, especially by high temperature solution polymerization process at temperatures higher than 100 °C.

Such process is essentially based on polymerizing the monomer and a suitable comonomer in a liquid hydrocarbon solvent in which the resulting polymer is soluble. Polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerization process is a high temperature solution polymerization process, using a polymerization temperature of higher than 100 °C. Preferably the polymerization temperature is at least 110 °C, and more preferably at least 150 °C. The polymerization temperature can be up to 250 °C.

The pressure in such a solution polymerization process is preferably in a range of 10 to 100 bar, preferably 15 to 100 bar, and more preferably 20 to 100 bar.

The liquid hydrocarbon solvent used is preferably a C₅-₁₂-hydrocarbon which may be unsubstituted or substituted by C₁-₄ alkyl group such as pentane, methyl pentane, hexane, heptane, octane, cyclohexane, methylcyclohexane and hydrogenated naphtha. More preferably unsubstituted C₆-C₁₀-hydrocarbon solvents are used.

A known solution polymerization technology suitable for the process for preparing the second polyethylene (**PE2**) is the COMPACT technology.

### Multilayered oriented film

The multilayered oriented film according to the present invention comprises at least one skin layer comprising the above-mentioned polyethylene composition. Hence, the multilayered oriented film may comprise more than one skin layer. Preferably, the multilayered oriented film comprises two skin layers, which enclose at least one inner layer. Preferably, both skin layers comprise the polyethylene composition. More preferably, at least one skin layer consists of the polyethylene composition and the other skin layer comprises the polyethylene composition. Most preferably, both skin layers consist of the polyethylene composition.

The multilayer oriented film may comprise two or more inner layers, such as 3, 5, 7 or more inner layers.

If a skin layer comprises the polyethylene composition, the skin layer preferably comprises at least 80 wt.-%, more preferably at least 90 wt.-%, and even more preferably at least 98 wt.-% of the polyethylene composition with respect to the total weight of the skin layer.

Preferably, the at least one inner layer comprises a second polyethylene (**PE2**) composition, more preferably consists of a second polyethylene (**PE2**) composition.

The multilayer oriented film preferably comprises more than 90 wt.-% of polyolefins, preferably more than 90 wt.-% of polyethylenes, with respect to the total weight of the multilayer oriented film. In addition, the multilayer oriented film according to the present invention may comprise non-polyethylene based polymers, i.e. polymers other than polyethylenes, from 0 to a maximum of 10 wt.-%, preferably a maximum of 5 wt.-%, with respect to the total weight of the multilayer oriented film. Hence, the multilayer oriented film according to the present invention is substantially made of polyethylene-based materials, in order to ensure design for recycling. Most preferably, the multilayer oriented film according to the present invention does not comprise any non-polyethylene based polymer, i.e. polymer other than polyethylenes.

The thickness of at least one skin layer, preferably all skin layers, is preferably in the range of from 1 to 30 µm and/or the thickness of at least one skin layer, preferably all skin layers, is in the range of 5 to 40% of the total thickness of the multilayer oriented film.

Preferably, the multilayer film before orienting (i.e. stretching) has a total thickness in the range of from 60 to 500 µm, more preferably in the range of from 120 to 180 µm, even more preferably in the range of from 130 to 170 µm, and most preferably in the range of from 140 to 160 µm.

Preferably, the multilayer oriented film has a total thickness in the range of from 5 to 50 µm, more preferably in the range of from 10 to 30 µm, and most preferably in the range of from 14 to 25 µm. Preferably, the thickness of the skin layer is in the range of 5 to 15% with respect to the total thickness of the multilayer oriented film.

In a preferred embodiment, the multilayer oriented film according to the present invention exhibits improved mechanical properties, in terms of tensile modulus in both machine and transverse directions. According to this embodiment, the multilayer oriented film preferably has a tensile modulus in machine direction (TM/MD) ranging from 2000 to 2450 MPa, preferably from 2050 to 2400 MPa and most preferably from 2100 to 2350 MPa, and/or a tensile modulus in transverse direction (TM/TD) ranging from 2050 to 2500 MPa, preferably from 2100 to 2450 MPa and most preferably from 2250 to 2400 MPa.

Furthermore, the multilayer oriented film preferably has a tensile strength in machine direction (TS/MD) ranging from 200 to 250 MPa, preferably from 210 to 240 MPa and most preferably from 220 to 235 MPa, and/or a tensile strength in transverse direction (TS/TD) ranging from 30 to 40 MPa, preferably from 34 to 39 MPa and most preferably from 36 to 38.5 MPa.

Furthermore, the multilayer oriented film preferably has an elongation at break in machine direction (EB/MD) ranging from 50 to 70%, preferably from 54 to 68% and most preferably from 57 to 67%, and/or an elongation at break in transverse direction (EB/TD) ranging from 2.0 to 3.0%, preferably from 2.2 to 2.95% and most preferably from 2.35 to 2.9%.

In view of optical properties, the multilayer oriented film preferably has a haze measured according to ASTM D 1003 of lower than 15.0%, more preferably lower than 14.0%, even more preferably lower than 12.0%, and most preferably lower than 11.0%. Usually, the multilayer oriented film preferably has a haze measured according to ASTM D 1003 of higher than 1.0%. Moreover, the multilayer oriented film preferably has a clarity measured according to ASTM D 1003 of higher than 91.0%, more preferably higher than 95.0%, and most preferably higher than 96.0%. Usually, the multilayer oriented film preferably has a haze measured according to ASTM D 1003 of lower than 98.0%.

The multilayer oriented film according to the present invention preferably has an optomechanical ability (OMA) according to the method described under item h) of the measurement methods herein of more than 3,000 MPa N, more preferably more than 4,500 MPa N, even more preferably more than 5,000 MPa N, and most preferably more than 6,000 MPa N.

Moreover, the multilayer oriented film preferably has a film appearance factor (FAF) according to the method described under item i) of the measurement methods herein of more than 13,400 MPa, more preferably more than 17,000 MPa, even more preferably more than 18,000 MPa, and most preferably more than 20,000 MPa.

Finally, the multilayer oriented film preferably has a protrusion puncture resistance determined according to ASTM D5748 of more than 18 N, more preferably more than 22 N, and most preferably of more than 25 N.

The multilayer oriented film may be an uniaxially oriented film, preferably a machine direction oriented film, or a biaxially oriented film Preferably, the multilayer oriented film is an uniaxially oriented film, most preferably a machine direction oriented (MDO) film.

### a) Process for preparing the multilayer oriented film

The preparation of a multilayer oriented film, particularly a multilayer uniaxially oriented film and most preferably a multilayer machine direction oriented (MDO) film, typically involves a sequence of well-established processing steps including multilayer coextrusion, casting, reheating, stretching, and annealing. In a preferred embodiment, the multilayer structure is first constructed by coextrusion of the at least two thermoplastic polyethylene compositions through a multilayer feedblock and a flat die. The feedblock configuration allows the individual polymer melts to be brought together in a controlled manner without significant intermixing, thereby forming distinct layers within the molten film structure. The polymer melts are delivered to the feedblock via separate extruders, each operating under temperature and shear conditions selected to achieve complete melting and homogeneity of the respective polymeric components. The multilayer melt is subsequently extruded through a slot die and cast onto a chill roll or a series of cooling rollers to form an unstretched, multilayer cast film, or alternatively and preferably, through an annular die in a blown film process, wherein the melt is inflated into a tubular bubble using internal air pressure and rapidly cooled by air rings to form a multilayer tubular film. In the case of cast extrusion, the temperature of the chill roll is typically controlled to rapidly cool the film and arrest further crystallization, with target surface temperatures usually below 50 °C to preserve uniform morphology and dimensional stability. In the blown film process, cooling is similarly optimized to minimize haze and ensure uniform thickness across the film circumference, while maintaining the integrity of the multilayer structure prior to orientation.

Following casting or blowing, the multilayer film is reheated to a suitable orientation temperature, which is typically below the melting point but above the glass transition or softening temperature of the predominant polymer components. The reheated film is then subjected to uniaxial stretching in the machine direction using an MDO unit composed of a series of rollers operating at increasing linear speeds, thereby inducing controlled elongation of the film in the direction of travel. The temperature during this stretching phase may be maintained or gradually varied to optimize molecular orientation, with the reheat temperature defined as the temperature at the entrance of the stretching section. After completion of the MD orientation, the film may be subjected to a thermal annealing step under tension to relax internal stresses and stabilize the oriented structure. If further orientation in the transverse direction is desired, the film may be reheated and stretched in the transverse direction, typically using a tenter frame. In the case of purely machine direction oriented films, the transverse stretching step is omitted, and the film is allowed to cool under controlled conditions to set the final properties. The described process yields a multilayer film with tailored orientation and mechanical characteristics, suitable for use in various packaging and technical applications.

### Use of the polyethylene composition / Use of the multilayer oriented film

The present invention further concerns the use of the polyethylene composition according to the present invention as described above for the production of at least one skin layer of a multilayer oriented film according to the present invention as described above.

Moreover, the present invention is directed towards the use of the multilayer oriented film for the production of packaging articles like bags, pouches, labels or lids, or other technical applications like banknotes. The multilayer oriented film of the present invention is preferably used for applications related to food packaging.

### Experimental Part

### Measurement Methods

### a) Tensile properties of films

Film tensile properties are measured at 23 °C according to ISO 527-3 with a specimen Type 2 using 25 µm thick multilayer oriented film produced in the experimental section. The clamping distance is 100 mm, for tensile modulus the test speed is 1 mm/min and for elongation at break (EB/MD) was measured with 200 mm/min test speed.

### b) Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR₂ of polyethylene was determined at a temperature of 190 °C and a load of 2.16 kg. The MFR₂₁ of polyethylene was determined at a temperature of 190 °C and a load of 21.6 kg.

### c) Molecular weight averages, molecular weight distribution (Mn, Mw, Mz, MWD)

Molecular weight averages (Mz, Mw and Mn), Molecular weight distribution (MWD) and its broadness, described by polydispersity index, PDI = Mw/Mn (wherein Mn is the number average molecular weight and Mw is the weight average molecular weight) were determined by Gel Permeation Chromatography (GPC) according to ASTM D 6474-12 using the following formulas: ${M}_{n} = \frac{{\sum }_{i = 1}^{N} {A}_{i}}{{\sum }_{i = 1}^{N} \left({A}_{i}/{M}_{i}\right)}$ (1) ${M}_{w} = \frac{{\sum }_{i = 1}^{N} \left({A}_{i}\times {M}_{i}\right)}{{\sum }_{i = 1}^{N} {A}_{i}}$ (2) ${M}_{z} = \frac{{\sum }_{i = 1}^{N} \left({A}_{i}\times {M}_{i}^{2}\right)}{{\sum }_{i = 1}^{N} \left({A}_{i}\times {M}_{i}\right)}$ (3)

For a constant elution volume interval ΔVi, where Aᵢ, and Mᵢ are the chromatographic peak slice area and polyolefin molecular weight (MW), respectively associated with the elution volume, Vᵢ, where N is equal to the number of data points obtained from the chromatogram between the integration limits.

A high temperature GPC instrument, equipped with an IR5 from PolymerChar (Valencia, Spain) and with 3 x Agilent-PLgel Olexis and 1x Agilent-PLgel Olexis Guard columns was used. As solvent and mobile phase 1,2,4-trichlorobenzene (TCB) stabilized with 250 mg/L 2,6-Di *tert*-butyl-4-methyl-phenol) was used. The chromatographic system was operated at 160 °C and at a constant flow rate of 1 mL/min. 200 µL of sample solution were injected per analysis. Data collection was performed using PolymerChar GPC-IR control software.

The column set was calibrated using universal calibration with 19 narrow MWD polystyrene (PS) standards in the range of 0.5 kg/mol to 11,500 kg/mol. The PS standards were dissolved at 160 °C for 30 min. The conversion of the polystyrene peak molecular weight to polyolefin molecular weights is accomplished by using the Mark Houwink equation and the following Mark Houwink constants: ${K}_{PS} = 19 \times {10}^{- 3} mL / g , {α}_{PS} = 0.655$ ${K}_{PE} = 39 \times {10}^{- 3} mL / g , {α}_{PE} = 0.725$ ${K}_{PP} = 19 \times {10}^{- 3} mL / g , {α}_{PP} = 0.725$

A third order polynomial fit was used to fit the calibration data. The processing and integration of the peaks was done according to ISO 16014-1, meaning that in the low molecular weight region the elution of the last volume of the PS standard of

500 g/mol was chosen, when the polymer peak does not return to the baseline before the corresponded elution volume.

All samples were prepared in the concentration range of 0.5 to 1 mg/ml and dissolved at 160 °C for 2.5 hours for PP or 3 hours for PE under continuous gentle shaking.

### d) Haze / Clarity

Haze and clarity were measured according to ASTM D 1003 on multilayer oriented film produced in the experimental section.

### e) Protrusion Puncture Resistance

Protrusion Puncture Resistance testing is conducted according to ASTM D5748 on the multilayer films produced in the experimental section. This test method determines the resistance of a film sample to the penetration of a probe with specific size of 19 mm diameter pear-shaped teflon coated at a standard low rate, a single test velocity (250 mm/min).

Performed at standard conditions, the test method imparts a biaxial stress loading. Cut the film specimens 200 mm × 200 mm to fit into the jig and conditioning done at 23±2 °C at 50±10% relative humidity.

The Puncture Resistance Force (PRF) measured in Newton is the maximum force or highest force observed during the test and Puncture Resistance Energy to break (J) is the energy used until the probe breaks the test specimen. The force is measured with a 500 N load cell, the elongation (deformation) is measured by a crosshead.

### f) Density

The density was measured according to ISO 1183-1:2019 - method A. Plates of 2 mm thickness were compression molded with a frame mold according to ISO 293:2023 at a temperature of 180 °C, a cooling rate of 15 °C/min, and a full pressure of 2.62 MPa. Specimen with a diameter of 40 mm were stamped out and conditioned for 24±2 h at 23 °C and 50% rH before testing. The specimens were weighed in air and immersed in Isopropanol, whose density is lower than that of the specimens.

### g) Quantification of microstructure by NMR spectroscopy

Quantitative nuclear-magnetic resonance (NMR) spectroscopy was used to quantify the comonomer content of the polymers.

Quantitative ¹³C{¹H} NMR spectra recorded in the molten-state using a Bruker Avance NEO 500 NMR spectrometer operating at 500.13 and 125.76 MHz for¹H and ¹³C respectively. All spectra were recorded using a ¹³C optimized 7 mm magic-angle spinning (MAS) probe head at 150 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.^{[1,2,3,4]} Standard single-pulse excitation was employed utilizing the transient NOE at short recycle delays of 3 s^{[1,5]} and the RS-HEPT decoupling scheme^{.[6,7]} A total of 1024 (1 k) transients were acquired per spectrum.

Quantitative ¹³C{¹H} NMR spectra were processed, integrated and quantitative properties determined using custom spectral analysis automation programs. All chemical shifts are internally referenced to the bulk methylene signal (δ+) at 30.00 ppm.[8]

### Quantification of C8

Characteristic signals corresponding to the incorporation of 1-octene were observed^{[8,9,10,11]} and all comonomer contents calculated with respect to all other monomers present in the polymer.

Characteristic signals resulting from isolated 1-octene incorporation i.e. EEOEE comonomer sequences, were observed. Isolated 1-octene incorporation was quantified using the integral of the signal at 38.3 ppm. This integral is assigned to the unresolved signals corresponding to both *B6 and *βB6B6 sites of isolated (EEOEE) and isolated double non-consecutive (EEOEOEE) 1-octene sequences respectively. To compensate for the influence of the two *βB6B6 sites the integral of the ββB6B6 site at 24.6 ppm is used: $O = {I}_{* B 6 + * βB 6 B 6} - 2 * {I}_{ββB 6 B 6}$

When characteristic signals resulting from consecutive 1-octene incorporation, i.e. EEOOEE comonomer sequences, were observed such consecutive 1-octene incorporation was quantified using the integral of the signal at 40.4 ppm assigned to the ααB6B6 sites accounting for the number of reporting sites per comonomer: $OO = 2 * {I}_{ααB 6 B 6}$

When characteristic signals resulting from isolated non-consecutive 1-octene incorporation, i.e. EEOEOEE comonomer sequences, were observed such isolated non-consecutive 1-octene incorporation was quantified using the integral of the signal at 24.6 ppm assigned to the ββB6B6 sites accounting for the number of reporting sites per comonomer: $OEO = 2 * {I}_{ββB 6 B 6}$

When characteristic signals resulting from isolated triple-consecutive 1-octene incorporation, i.e. EEOOOEE comonomer sequences, were observed such isolated triple-consecutive 1-octene incorporation was quantified using the integral of the signal at 41.2 ppm assigned to the ααγB6B6B6 sites accounting for the number of reporting sites per comonomer: $OOO = 3 / 2 * {I}_{ααγB 6 B 6 B 6}$

With no other signals indicative of other comonomer sequences observed the total 1-octene comonomer content was calculated based solely on the amount of isolated (EEOEE), isolated double-consecutive (EEOOEE), isolated non-consecutive (EEOEOEE) and isolated triple-consecutive (EEOOOEE) 1-octene comonomer sequences: ${O}_{total} = O + OO + OEO + OOO$

Characteristic signals resulting from saturated end-groups were observed. Such saturated end-groups were quantified using the average integral of the two resolved signals at 22.9 and 32.23 ppm. The 22.84 ppm integral is assigned to the unresolved signals corresponding to both 2B6 and 2S sites of 1-octene and the saturated chain end respectively. The 32.2 ppm integral is assigned to the unresolved signals corresponding to both 3B6 and 3S sites of 1-octene and the saturated chain end respectively. To compensate for the influence of the 2B6 and 3B6 1-octene sites the total 1-octene content is used: $S = \left(1/2\right) * \left({I}_{2 S + 2 B 6}+{I}_{3 S + 3 B 6}-2*{O}_{total}\right)$

The ethylene comonomer content was quantified using the integral of the bulk methylene (bulk) signals at 30.00 ppm. This integral included the γ and 4B6 sites from 1-octene as well as the δ⁺ sites. The total ethylene comonomer content was calculated based on the bulk integral and compensating for the observed 1-octene sequences and end-groups:${E}_{total} = \left(1/2\right) * \left[{I}_{bulk}+2*O+1*OO+3*OEO+0*OOO+3*S\right]$

It should be noted that compensation of the bulk integral for the presence of isolated triple-incorporation (EEOOOEE) 1-octene sequences is not required as the number of under and over accounted ethylene units is equal.

The total mole fraction of 1-octene in the polymer was then calculated as: $fO = {O}_{total} / \left({E}_{total}+{O}_{total}\right)$

The total comonomer incorporation of 1-octene in weight percent was calculated from the mole fraction in the standard manner: $O \left[wt%\right] = 100 * \left(fO*112.21\right) / \left(\left(fO*112.21\right)+\left(\left(1-fO\right)*28.05\right)\right)$

### Quantification of C4

Characteristic signals resulting from isolated 1-butene incorporation i.e. EEBEE comonomer sequences, were observed {brandolini01}. Isolated 1-butene incorporation was quantified using the integral of the signal at 39.8 ppm assigned to the *B2 sites, accounting for the number of reporting sites per comonomer: $B = {I}_{* B 2}$

When characteristic signals resulting from consecutive 1-butene incorporation i.e. EBBE comonomer sequences were observed, such consecutive 1-butene incorporation was quantified using the integral of the signal at 39.3 ppm assigned to the ααB2B2 sites accounting for the number of reporting sites per comonomer: $BB = 2 * {I}_{ααB 2 B 2}$

When characteristic signals resulting from non-consecutive 1-butene incorporation i.e. EBEBE comonomer sequences were also observed, such non-consecutive 1-butene incorporation was quantified using the integral of the signal at 24.7 ppm assigned to the ββB2B2 sites accounting for the number of reporting sites per comonomer: $BEB = 2 * {I}_{ββB 2 B 2}$

Due to the overlap of the *B2 and *βB2B2 sites of isolated (EEBEE) and non-consecutively incorporated (EBEBE) 1-butene respectively the total amount of isolated 1-butene incorporation is corrected based on the amount of non-consecutive 1-butene present: $B = {I}_{* B 2} - 2 * {I}_{ββB 2 B 2}$

With no other signals indicative of other comonomer sequences, i.e. butene chain initiation, observed the total 1-butene comonomer content was calculated based solely on the amount of isolated (EEBEE), consecutive (EBBE) and non-consecutive (EBEBE) 1-butene comonomer sequences: ${B}_{total} = B + BB + BEB$

Characteristic signals resulting from saturated end-groups were observed. The content of such saturated end-groups was quantified using the average of the integral of the signals at 22.8 and 32.2 ppm assigned to the 2s and 3s sites respectively: $S = \left(1/2\right) * \left({I}_{2 S}+{I}_{3 S}\right)$

The relative content of ethylene was quantified using the integral of the bulk methylene (δ+) signals at 30.00 ppm: $E = \left(1/2\right) * {I}_{δ +}$

The total ethylene comonomer content was calculated based the bulk methylene signals and accounting for ethylene units present in other observed comonomer sequences or end-groups: ${E}_{total} = E + \left(5/2\right) * B + \left(7/2\right) * BB + \left(9/2\right) * BEB + \left(3/2\right) * S$

The total mole fraction of 1-butene in the polymer was then calculated as: $fB = {B}_{total} / \left({E}_{total}+{B}_{total}\right)$

The total comonomer incorporation of 1-butene in mole percent was calculated from the mole fraction in the usual manner: $B \left[mol%\right] = 100 * fB$

The total comonomer incorporation of 1-butene in weight percent was calculated from the mole fraction in the standard manner: $B \left[wt%\right] = 100 * \left(fB*56.11\right) / \left(\left(fB*56.11\right)+\left(\left(1-fB\right)*28.05\right)\right)$

### References

[1] Klimke, K., Parkinson, M., Piel, C., Kaminsky, W., Spiess, H.W., Wilhelm, M., Macromol. Chem. Phys. 2006;207:382.
[2] Parkinson, M., Klimke, K., Spiess, H.W., Wilhelm, M., Macromol. Chem. Phys. 2007;208:2128.
[3] Castignolles, P., Graf, R., Parkinson, M., Wilhelm, M., Gaborieau, M., Polymer 50 (2009) 2373
[4] NMR Spectroscopy of Polymers: Innovative Strategies for Complex Macromolecules, Chapter 24, 401 (2011)
[5] Pollard, M., Klimke, K., Graf, R., Spiess, H.W., Wilhelm, M., Sperber, O., Piel, C., Kaminsky, W., Macromolecules 2004;37:813.
[6] Filip, X., Tripon, C., Filip, C., J. Mag. Resn. 2005, 176, 239
[7] Griffin, J.M., Tripon, C., Samoson, A., Filip, C., and Brown, S.P., Mag. Res. in Chem. 2007 45, S1, S198
[8] J. Randall, Macromol. Sci., Rev. Macromol. Chem. Phys. 1989, C29, 201.
[9] Qiu, X., Redwine, D., Gobbi, G., Nuamthanom, A., Rinaldi, P., Macromolecules 2007, 40, 6879
[10] Liu, W., Rinaldi, P., McIntosh, L., Quirk, P., Macromolecules 2001, 34, 4757
[11] A.J. Brandolini, D.D. Hills, "NMR spectra of polymers and polymer additives", Marcel Deker Inc., 2000

### h) Optomechanical ability (OMA)

Optomechanical ability (OMA) is calculated according to the following formula: $OMA = \frac{TM \left(MD\right) \times PRF}{Haze}$ wherein
- *TM(MD)*: is the tensile modulus in machine direction, as determined in accordance with ISO 527-3 on a 25 µm cast film, in MPa;
- *PRF*: is the Puncture Resistance Force, as determined on a 25 µm multilayer oriented film produced in the experimental section at 23 °C in accordance with ISO 7765-1:1988 / Method A, in N; and
- *Haze*: is determined in accordance with ASTM D1003 on a 25 µm multilayer oriented film produced in the experimental section, in %.

### i) Film appearance factor (FAF)

The film appearance factor (FAF) is calculated according to the following formula: $FAF = \frac{TM \left(MD\right) \times Clarity}{Haze}$ wherein
- *TM(MD)*: is the tensile modulus in machine direction, as determined in accordance with ISO 527-3 on a 25 µm cast film, in MPa;
- *Clarity*: is determined in accordance with ASTM D1003 on a 25 µm multilayer oriented film produced in the experimental section, in %; and
- *Haze*: is determined in accordance with ASTM D1003 on a 25 µm multilayer oriented film produced in the experimental section, in %.

### Examples

### a) Materials

The following materials have been used in the present examples.

### High density polyethylene HE1

The high-density polyethylene (HEI1) used in the inventive and comparative examples was produced in a pilot plant configured to operate as prepolymerization - loop - gas phase reactor using a Ziegler-Natta catalyst whose details are disclosed in EP 1 378 528 A1. The conditions for the reaction are presented in Table 1.

**Table 1. Polymerization conditions of HEI1**

| *Prepolymerization* | |
|---|---|
| Temperature [°C] | 70 |
| Pressure [kPa] | 5700 |
| H₂ [g/h] | 5 |

| *Loop* | |
|---|---|
| Temperature [°C] | 95 |
| Pressure [kPa] | 5500 |
| C₂ concentration [mol-%] | 3.5 |
| H₂ / C₂ [mol/kmol] | 430 |
| Density [kg/m³] | 970 |
| MFR₂ [g/10 min] | 350 |
| Split [%] | 49 |

| *GPR* | |
|---|---|
| Temperature [°C] | 85 |
| Pressure [kPa] | 2000 |
| H₂ / C₂ [mol/kmol] | 110 |
| C₄ / C₂ [mol/kmol] | 25 |
| Split [%] | 51 |
| MFR₂ in GPR [g/10 min]* | 0.002 |
| Density in GPR [kg/m³]* | 941.6 |

| | |
|---|---|
| ** values calculated for polymer produced in GPR* | |

The polymer obtained was pelletized with 500 ppm Irganox 1010 (supplied by BASF), 2000 ppm Irgafos 168 (supplied by BASF), 500 ppm calcium stearate (CEASIT FI, supplied by Baerlocher) in a twin screw extruder. The properties presented in Table 3 below were measured on these compositions.

### High density polyethylene HEC2

The high density polyethylene HEC2used in the inventive and comparative is a high-density polyethylene produced in Borstar pilot plant, with a configuration of prepolymerizer-first loop-second loop, the catalyst used is described in EP 4 108 434 B1, CAT. The typical polymerization conditions are shown in Table 2 below. The obtained powder is compounded with 1500 ppm of Irganox B215 (BASF) and 500 ppm of CEASIT-FI (Bärlocher) in a twin screw extruder. The properties are shown in Table 3 below.

**Table 2. Polymerization conditions of HEC2**

| *Prepolymerization* | |
|---|---|
| Temperature [°C] | 50 |
| Catalyst feed [g/h] | 24.2 |
| Pressure [kPa] | 5719 |
| C₂ feed [kg/h] | 4.0 |
| H₂ feed [g/h] | 0.03 |
| Split [%] | 6.6 |

| *1^{st} loop reactor* | |
|---|---|
| Temperature [°C] | 85 |
| Pressure [kPa] | 5231 |
| C₂ concentration [mol-%] | 5.5 |
| H₂/C₂ ratio [mol/kmol] | 0.22 |
| C₄/C₂ ratio [mol/kmol] | 4.6 |
| Split [%] | 41.2 |

| *2^{nd} loop reactor* | |
|---|---|
| Temperature [°C] | 85 |
| Pressure [kPa] | 5355 |
| C₂ concentration [mol-%] | 5.0 |
| H₂/C₂ ratio [mol/kmol] | 0.18 |
| C₄/C₂ ratio [mol/kmol] | 2 |
| Split [%] | 52.2 |

### High density polyethylene HEI3

HEI3 is a high-density polyethylene homopolymer for multilayer films produced according to Inventive Example 1 of WO 2020/109289 A1.

Respective properties of this material can be found in Table 3.

### Polyolefin elastomer (POE)

The following materials have been used as **POE** in the present examples.
- PE1: is Queo^{™} 8230 commercially available by Borealis AG, which is an ethylene based octene-1 plastomer.
- PE2: is Queo^{™} 0230 commercially available by Borealis AG, which is an ethylene based octene-1 plastomer.
- PE3: ENGAGE^{™} 8842 available by Dow Plastics is an ethylene-octene copolymer elastomer.

Respective properties of these materials can be found in Table 3.

**Table 3: Properties of the polymer materials used in the examples (HE = HDPE; PE = POE)**

| | | HEI1 | HEC2 | HEI3 | PE1 | PE2 | PE3 |
|---|---|---|---|---|---|---|---|
| Density | [kg/m³] | 956 | 952 | 960 | 883 | 902 | 857 |
| MFR₂ | [g/10 min] | 0.8 | 0.99 | 0.7 | 30 | 30 | 1 |
| MFR₂₁ | [g/10 min] | 47.35 | 22.63 | 43 | 746 | 800.9 | 34.39 |
| FRR_{21/2} | | 59.2 | 22.9 | 61.4 | 24.9 | 26.7 | 34.4 |
| Mw | [g/mol] | 133,500 | 107,000 | 110,300 | 43,500 | 43,200 | 115,000 |
| Mz | [g/mol] | 721,000 | 250,500 | 517,400 | 80,650 | 81,450 | 191,500 |
| MWD | | 14.98 | 3.5 | 13.6 | 3.02 | 3.02 | 2.44 |
| Mz/Mw | | 5.4 | 2.3 | 4.7 | 1.9 | 1.9 | 1.7 |
| C₄ | [wt.-%] | 0.6 | n.m. | 0 | 0 | 0 | 0 |
| C₈ | [wt.-%] | 0 | n.m. | 0 | 26.1 | 17.6 | 41.4 |

The blending of HDPE and POE according to current invention is done on a twin screw extruder with the blending ratio shown in Table 4.

**Table 4. The ratio and basic properties of the blends**

| | | | IE1 | IE2 | IE3 | IE4 | IE5 | CE2 | IE6 |
|---|---|---|---|---|---|---|---|---|---|
| HDPE | HEI1 | wt.-%] | 90 | 80 | 70 | 70 | 90 | | |
| | HEC2 | [wt.-%] | | | | | | 80 | |
| | HEI3 | [wt.-%] | | | | | | | 80 |
| POE | PE1 | [wt.-%.] | 10 | 20 | 30 | | | 20 | 20 |
| | PE2 | [wt.-%] | | | | 30 | | | |
| | PE3 | [wt.-%] | | | | | 10 | | |
| MFR₂ | | [g/10 min] | | 1.3 | | | | | |
| MFR₂₁ | | [g/10 min] | | 75.5 | | | | | |
| Density | | [kg/m³] | 948 | 942 | 934 | 939 | 946 | 938 | 945 |
| Mw | | [g/mol] | | 114,000 | | | | | |
| Mz | | [g/mol] | | 642,000 | | | | | |
| MWD | | | | 12.5 | | | | | |
| Tm | | [°C] | | 131 | 130 | | | | |
| Hm | | [J/g] | | 168 | 157 | | | | |
| Tc | | [°C] | | 117 | 117 | | | | |

### b) Preparation of multilayer oriented films

First of all, the multilayer film is extruded on an Alpine 7-layer blown film machine, wherein the outermost layers (i.e. skin layers) are layers A and G, which consist of HDPE and POE blends having compositions according to Table 4, wherein the materials of these compositions are further described in Table 3. The material properties of the blends are also described in Table 4. The inner layers B to F are all made from HEI1. The total production rate is 200 kg/h, and all of the extruder is run at the same melt temperature, i.e. 220 °C. The BUR is 1:2.5, frostline distance 950 mm, and the final thickness of the extruded film was 150 µm. The layer thickness distribution from A to G is 15%-15%-15%-10%-15%-15%-15%.

After the extruded film had solidified, it was subjected to a Machine Direction Orientation (MDO) process in an Alpine MDO 20 unit. The temperature of stretching roll is 125 °C, uptake speed 61 m/min, and the stretch ratio of 6.0x was achieved resulting in a final film thickness of 25 µm.

### c) Film properties

Comparative examples CE1 and 2 as well as inventive examples IE1-6 have been prepared according to the aforementioned preparation method, wherein layers A and G are chosen accordingly. As can be seen, the material of layers A and G in comparative example CE1 comprises only HDPE, but no POE, while all other examples provide blends thereof. Inventive examples vary the weight ratio of HDPE to POE, while inventive examples IE3 and IE4 as well as IE1 and IE5 vary the type of POE used. Finally. IE2, IE6, and CE2 vary the HDPE component, wherein CE2 comprises a non-inventive HDPE HEC3, which has low MWD, low Mz/Mw, and low FRR_{21/2}.

It should be noted that CE2 could not be processed without fluorinated polymer processing aid, as otherwise severe melt fracture appeared on the surface of the film. Hence, a film based on CE2 could only be produced with the addition of 2-3 wt.-% of POLYBATCH^{®} AMF 705 HF by LyondellBasell. It should be further noted that this is not favorable for the application due to concerns in view of perfluorosulfonic acid.

As can be seen by the results of Table 5, all inventive examples not only exhibit improved optical properties, such as better haze and clarity, but also demonstrate a well-balanced performance in view of mechanical properties.

In particular the film appearance factor (FAF), which is a measure for the balance of stiffness, haze, and clarity, is crucial for applications requiring a polyethylene terephthalate replacement. The improved balance found for the inventive examples makes them a strong candidate for this purpose.

**Table 5: Performance parameters of the films of the inventive and comparative examples.**

| | | CE1 | IE1 | IE2 | IE3 | IE4 | IE5 | CE2 | IE6 |
|---|---|---|---|---|---|---|---|---|---|
| HDPE | HEI1/wt% | 100 | 90 | 80 | 70 | 70 | 90 | | |
| | HEC2/wt% | | | | | | | 80 | |
| | HEI3/wt% | | | | | | | | 80 |
| POE | PE1/wt% | | 10 | 20 | 30 | | | 20 | 20 |
| | PE2/wt% | | | | | 30 | | | |
| | PE3/wt% | | | | | | 10 | | |
| TM/MD | [MPa] | 2560 | 2232 | 2094 | 2012 | 2136 | 2215 | 2041 | 2325 |
| TS/MD | [MPa] | 238.9 | 222.3 | 223.6 | 214.1 | 214.2 | 234.3 | 234.3 | 243.5 |
| EB/MD | % | 53.5 | 56.5 | 62.5 | 54.7 | 65.9 | 66.1 | 56.7 | 50.2 |
| TM/TD | [MPa] | 2607 | 2426 | 2324 | 2078 | 2220 | 2343 | 2224 | 2428 |
| TS/TD | [MPa] | 39.4 | 38.7 | 38.1 | 34.7 | 36.2 | 36.3 | 36.5 | 39.5 |
| EB/TD | % | 2.1 | 2.4 | 2.7 | 2.8 | 2.5 | 2.3 | 2.5 | 2.6 |
| Haze | % | 17.1 | 10.8 | 9.9 | 10.9 | 14.9 | 11.6 | 15.1 | 12.1 |
| Clarity | % | 88.7 | 95 | 95.9 | 95.2 | 94.6 | 95.3 | 90.7 | 96.6 |
| PRF | [N] | 17.88 | 28.66 | 37.48 | 30.22 | 29.8 | 27.24 | 21.88 | 24.19 |
| FAF | [MPa] | 13318.0 | 19615.2 | 20223.0 | 17508.5 | 13579.7 | 18276.2 | 12300.3 | 18561.6 |
| OMA | [MPa N] | 2684.6 | 5917.6 | 7903.6 | 5557.8 | 4277.7 | 5223.9 | 2967.2 | 4648.1 |

| | | | | | | | | | |
|---|---|---|---|---|---|---|---|---|---|
| MD: machine direction; TD: transverse direction | | | | | | | | | |

## Claims

1. A multilayer oriented film having skin layers and at least one inner layer, wherein at least one skin layer comprises a polyethylene composition, wherein the polyethylene composition comprises
1) 55 to 98 wt.-% of a first polyethylene (**PE1**), where the first polyethylene (**PE1**) has a flow rate ratio (FRR_{21/2}) in the range of from 25 to100 and a molecular weight distribution (MWD) determined by Gel Permeation Chromatography (GPC) according to the method described herein in section c) under measurement methods in the range of from 6.0 to 30.0,
2) 2 to 45 wt.-% of a second polyethylene (**PE2**), where the second polyethylene (**PE2**) has a flow rate ratio (FRR_{21/2}) in the range of from 15 to 60 and a molecular weight distribution (MWD) determined by Gel Permeation Chromatography (GPC) according to the method described herein in section c) under measurement methods in the range of from 2.0 to 6.0,
wherein the density of the first polyethylene (**PE1**) is higher than the density of the second polyethylene (**PE2**), both determined according to ISO 1183-1:2019 - method A.

2. The multilayer oriented film according to claim 1, wherein the at least one skin layer comprises at least 80 wt.-%, preferably at least 90 wt.-%, and more preferably at least 98 wt.-%, and/or wherein the at least one skin layer consists of the polyethylene composition.

3. The multilayer oriented film according to claims 1 or 2, wherein the density determined according to ISO 1183-1:2019 - method A of the first polyethylene (**PE1**) is more than 10 kg/m³ higher than the density determined according to ISO 1183-1:2019 - method A of the second polyethylene (**PE2**), preferably 20 kg/m³ higher.

4. The multilayer oriented film according to any of the preceding claims 1 to 3, wherein the density determined according to ISO 1183-1:2019 - method A of the first polyethylene (**PE1**) is in the range of from 930 to 970 kg/m³, preferably in the range of from 950 to 965 kg/m³, and most preferably in the range of from 952 to 960 kg/m³.

5. The multilayer oriented film according to any of the preceding claims 1 to 4, wherein the density determined according to ISO 1183-1:2019 - method A of the second polyethylene (**PE2**) is in the range of from 850 to 908 kg/m³, preferably in the range of from 870 to 905 kg/m³, and most preferably in the range of from 880 to 900 kg/m³.

6. The multilayer oriented film according to any of the preceding claims 1 to 5, wherein the polyethylene composition has a melting temperature *Tₘ* in the range of from 125 °C to 145 °C determined according to ISO 11357-1.

7. The multilayer oriented film according to any of the preceding claims 1 to 6, wherein the first polyethylene (**PE1**) has a MFR₂ determined in accordance with ISO 1133 at 190 °C under a load of 2.16 kg in the range of from 0.1 to 10 g/10 min and/or wherein the first polyethylene (**PE1**) has a MFR₂₁ determined in accordance with ISO 1133 at 190 °C under a load of 21.6 kg in the range of from 4 to 500 g/10 min and/or wherein the first polyethylene (**PE1**) has a ratio Mz/Mw determined by Gel Permeation Chromatography (GPC) according to the method described herein in section c) under measurement methods in the range of from 3.0 to 7.0.

8. The multilayer oriented film according to any of the preceding claims 1 to 7, wherein the second polyethylene (**PE2**) has a MFR₂ determined in accordance with ISO 1133 at 190 °C under a load of 2.16 kg in the range of from 0.1 to 100 g/10 min and/or wherein the second polyethylene (**PE2**) has a MFR₂₁ determined in accordance with ISO 1133 at 190 °C under a load of 21.6 kg in the range of from 20 to 1000 g/10 min and/or wherein the second polyethylene (**PE2**) has a ratio Mz/Mw determined by Gel Permeation Chromatography (GPC) according to the method described herein in section c) under measurement methods in the range of from 1.0 to 4.0.

9. The multilayer oriented film according to any of the preceding claims 1 to 8, wherein the second polyethylene (**PE2**) has a Mw determined by Gel Permeation Chromatography (GPC) according to the method described herein in section c) under measurement methods of more than 10,000 g/mol, preferably more than 20,000 g/mol, more preferably more than 30,000 g/mol, and most preferably more than 40,000 g/mol.

10. The multilayer oriented film according to any of the preceding claims 1 to 9, wherein the thickness of the at least one skin layer is in the range of from 1 to 30 µm and/or wherein the thickness of the at least one skin layer is in the range of 5 to 40% of the total thickness of the multilayer oriented film.

11. The multilayer oriented film according to any of the preceding claims 1 to 10, wherein the multilayer oriented film has a thickness in the range of from 60 to 500 µm, preferably in the range of from 120 to 180 µm, more preferably in the range of from 130 to 170 µm, and most preferably in the range of from 140 to 160 µm.

12. The multilayer oriented film according to any of the preceding claims 1 to 11, wherein the multilayer oriented film comprises more than 90 wt.-% of polyolefins, preferably more than 90 wt.-% of polyethylenes, with respect to the total weight of the multilayer oriented film.

13. The multilayer oriented film according to any of the preceding claims 1 to 12, wherein the multilayer oriented film is obtainable by uniaxial stretching, preferably by a machine direction orientation process (MDO).

14. The multilayer oriented film according to any of the preceding claims 1 to 13, wherein the oriented film has an optomechanical ability (OMA) determined according to the description (item h) of section *'measurement methods'*) of more than 3000 MPa N and/or wherein the multilayer oriented film has a film appearance factor (FAF) determined according to the description (item i) of section *'measurement methods*') of more than 13400 MPa.

15. The use of a polyethylene composition, wherein the polyethylene composition comprises
1) 55 to 98 wt.-% of a first polyethylene (**PE1**), where the first polyethylene (**PE1**) has a flow rate ratio (FRR_{21/2}) in the range of from 25 to100 and a molecular weight distribution (MWD) determined by Gel Permeation Chromatography (GPC) according to the method described herein in section c) under measurement methods in the range of from 6.0 to 30.0,
2) 2 to 45 wt.-% of a second polyethylene (**PE2**), where the second polyethylene (**PE2**) has a flow rate ratio (FRR_{21/2}) in the range of from 15 to 60 and a molecular weight distribution (MWD) determined by Gel Permeation Chromatography (GPC) according to the method described herein in section c) under measurement methods in the range of from 2.0 to 6.0,
wherein the density of the first polyethylene (**PE1**) is higher than the density determined according to ISO 1183-1:2019 - method A of the second polyethylene (**PE2**), both determined according to ISO 1183-1:2019 - method A,
for the production of at least one skin layer of a multilayer oriented film according to any of the preceding claims 1 to 14.
